# EUROPEAN PATENT APPLICATION

(11) **EP 3 315 405 A1**
(43) Date of publication of application: **02.05.2018**
(21) Application number: 16306396.9
(22) Date of filing: 25.10.2016
(51) Int. Cl.: B64C 39/02, H04W 4/02, H04L 29/06

(54) **COLLABORATIVE SECURITY SYSTEM TO CONTROL DRONES**

(71) Applicant: Alcatel Lucent, 91620 Nozay (FR)
(72) Inventor: MARTIN, Antony, 91620 Nozay (FR); PAPILLON, Serge, 91620 Nozay (FR)
(74) Representative: Mouney, Jérôme

(57) **Abstract**

For the management and monitoring of drones, a privacy server (PS):
receives (S1) a request (ReqB) for a deployment of a given beacon from a user device (UD), the request (ReqB) containing location data, rules of action of drones and a beacon category,
checks (S2) the validity of location data of the request (ReqB) by verifying the location data are not in conflict with existing location data or existing defined areas,
generates (S4) a set of data defining a signal to be sent by the given beacon according to the beacon category, with instructions to deploy the beacon,
stores (S4) beacon information related to the given beacon in databases, the beacon information containing a beacon identifier associated the location data and the rules of action of drones,
sends (S5) a reply (RepB) to the user device (UD), the reply (RepB) containing the generated set of data and the instructions to deploy the given beacon.

## Description

### FIELD OF INVENTION

The present subject matter generally relates to the management and monitoring of drones.

### BACKGROUND

Drones are getting more and more attraction over the end user and business markets. Drones like flying drones or rolling drones are equipped with a lot of sensors and can collect a lot of information such as videos, images, and wireless network traffic.

To counter the risk of privacy violation by drones, some solutions exist based on coupling detection like acoustic technology, radar technology and based on reaction: take the control of the drone with malware technology to drop the drone, use a laser against the drone or jamming of drone command and control link.

All these solutions are one way from the anti-drone side to the drone itself and are inefficient to prevent drones to fly upon restricted areas.

Finally, there is a need for defining enforceable boundaries of privacy usable for both end users and drone manufacturers.

### SUMMARY

This summary is provided to introduce concepts related to the present inventive subject matter. This summary is not intended to identify essential features of the claimed subject matter nor is it intended for use in determining or limiting the scope of the claimed subject matter.

In one implementation, a method for the management and monitoring of drones, comprises the following steps in a privacy server:
receiving a request for a deployment of a given beacon from a user device, the request containing location data, rules of action of drones and a beacon category,
checking the validity of location data of the request by verifying the location data are not in conflict with existing location data or existing defined areas,
generating a set of data defining a signal to be sent by the given beacon according to the beacon category, with instructions to deploy the beacon,
storing beacon information related to the given beacon in databases, the beacon information containing a beacon identifier associated with the location data and the rules of action of drones,
sending a reply to the user device, the reply containing the generated set of data and the instructions to deploy the given beacon.

Advantageously, beacons are defined in accordance with the laws and the individual privacy rights and recognized by the drones. To avoid abuse, the beacons are associated with privacy system that would support roles and access control rules. The privacy system is bi-directional and collaborative, supporting the establishment of regulation respecting both privacy and governments rules.

In an embodiment, the privacy server receives a request from the user device for the generation of a user certificate, and signs the reply by means of private key of a certificate associated with the privacy server.

In an embodiment, privacy server defines an area based on the location data, and the beacon information further contains the defined area.

In an embodiment, the privacy server:
receives a request from a drone, the request containing location data related to the current position of the drone and parameters related to the drone,
estimates a destination area based on the current position of the drone and parameters related to the drone,
identifies beacons associated with areas overlapped by the estimated destination area,
determines parts of databases related to the identified beacons, said parts of databases containing rules of action of drones,
uploads the identified parts of the databases to the drone.

In an embodiment, the estimated destination area is a circle with position of the drone as center and the autonomy of the drone in distance as radius.

In an embodiment, if the autonomy in distance is not included in the request, the privacy server deducts it from the parameters related to the drone or from previous estimated autonomy for similar drones.

In an embodiment, the privacy server receives another request from the drone, said another request containing information associated with a beacon, identifies the beacon and the associated rules by means of said information, and sends a reply containing the identified rules back to the drone.

In an embodiment, said rules of action of drones define actions that are allowed or denied for drones with respect to said area.

In an embodiment, the privacy server sends a public key of the certificate associated with the privacy server to the user device in a first handshake.

In an embodiment, the privacy server uploads a public key of the certificate associated with the privacy server to a drone.

In another implementation a privacy server is described. The privacy server for the management and monitoring of drones comprises:
means for receiving a request for a deployment of a given beacon from a user device, the request containing location data, rules of action of drones and a beacon category,
means for checking the validity of location data of the request by verifying the location data are not in conflict with existing location data or existing defined areas,
means for generating a set of data defining a signal to be sent by the given beacon according to the beacon category, with instructions to deploy the beacon,
means for storing beacon information related to the given beacon in databases, the beacon information containing a beacon identifier associated with the location data and the rules of action of drones,
means for sending a reply to the user device, the reply containing the generated set of data and the instructions to deploy the given beacon

In an embodiment, the privacy server further contains:
means for receiving a request from a drone, the request containing location data related to the current position of the drone and parameters related to the drone,
means for estimating a destination area based on the current position of the drone and parameters related to the drone,
means for identifying beacons associated with areas overlapped by the estimated destination area,
means for determining parts of databases related to the identified beacons, said parts of databases containing rules of action of drones,
means for uploading the identified parts of the databases to the drones.

In another implementation a computer-readable medium having embodied thereon a computer program for executing a method for the management and monitoring of drones. Said computer program comprises instructions which carry out steps according to the method according to the invention.

### BRIEF DESCRIPTION OF THE FIGURES

The detailed description is described with reference to the accompanying figures. In the figures, the left-most digit(s) of a reference number identifies the figure in which the reference number first appears. The same numbers are used throughout the figures to reference like features and components. Some embodiments of system and/or methods in accordance with embodiments of the present subject matter are now described, by way of example only, and with reference to the accompanying figures, in which:
Figure 1 illustrates a schematic block diagram of a communication system according to one embodiment of the invention for the management and monitoring of drones.
Figure 2 illustrates a flow chart illustrating a method for the management and monitoring of drones according to one embodiment of the invention.

The same reference number represents the same element or the same type of element on all drawings.

It should be appreciated by those skilled in the art that any block diagrams herein represent conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

### DESCRIPTION OF EMBODIMENTS

The figures and the following description illustrate specific exemplary embodiments of the invention. It will thus be appreciated that those skilled in the art will be able to devise various arrangements that, although not explicitly described or shown herein, embody the principles of the invention and are included within the scope of the invention. Furthermore, any examples described herein are intended to aid in understanding the principles of the invention, and are to be construed as being without limitation to such specifically recited examples and conditions. As a result, the invention is not limited to the specific embodiments or examples described below, but by the claims and their equivalents.

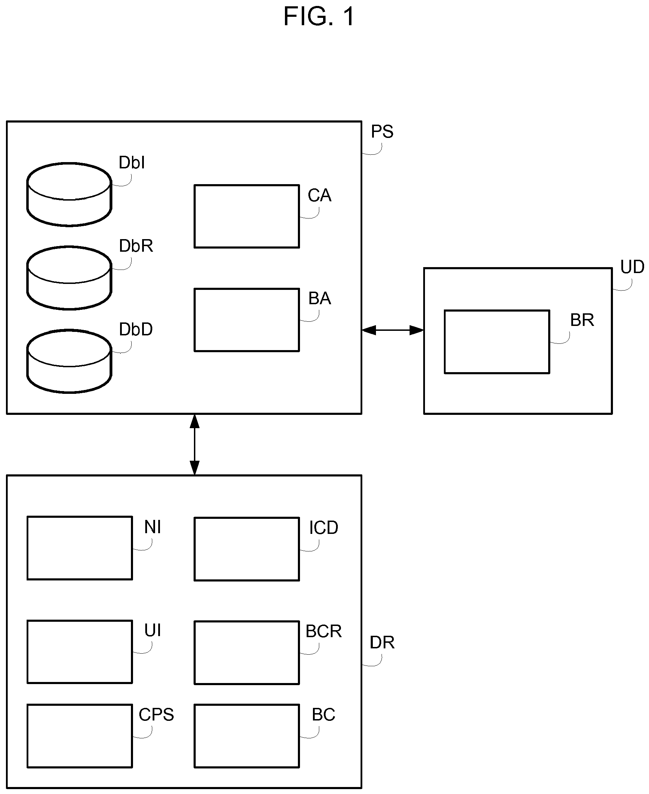

Referring to FIG. 1, a communication system comprises a privacy server PS, a user device UD and a drone DR.

The privacy server PS is responsible for the management of the beacon devices from validity perspectives, authenticity perspectives and policy perspectives. For example, the privacy server PS is managed by a privacy warrant or telco operator and keeps cryptographic asymmetric keys associated with a user, combined with legal rules and optionally local rules (e.g. district, or building level). The privacy server PS delivers signed beacons or can revoke them.

An authority can be in charge of investigating the scope of the rules and their validity. This authority warns appropriate entities if there is any conflict with existing rules. This allows preventing abuse.

The privacy server PS includes a cryptographic agent CA that is able to generate certificates and stores cryptographic materials. The cryptographic agent CA generates user certificates (comprising pair of public/private keys) and signs cryptographic materials by means of a private key of a root Certificate Authority digital certificate associated with the privacy server. A public key of the root Certificate Authority digital certificate is downloaded by a drone.

The privacy server PS includes a beacon agent BA that processes the input from a request containing rules sent from the user device UD against a database DbR of public rules and a database DbI of identifiers and geographical zone to check the validity of the request. If the request is valid and compliant to the rules, then the beacon agent BA authorizes the request and generates a digitally "signed" beacon. The beacon agent BA stores the signed beacon in a database DbB of beacons, and sends the result back to the user device UD.

The beacon agent BA performs an analysis in twofold. A first check is about the requested rules legitimacy according to the requester geographical zone by means of the database DbI of identifiers and geographical zones: for example Bob is the owner of his house, 8th brighton street London, and he cannot request rules for another house or another zone such as a soccer field. A second check is about rules existing before in the database DbB of beacons: if there is already a beacon (and its associated rules) requested for the zone (e.g. Bob's house), then the beacon agent BA performs checks to solve the conflict and therefore avoid abuse.

The user device UD is able to communicate with the privacy server PS. The user device UD can be a mobile terminal, a personal computer or other client device such as a smartphone, a tablet. The user device UD stores an application that is prestored in a memory module, loaded via disk or downloaded to the memory module via a network interface. The application can be customized to operate a beacon requester BR in conjunction with the privacy server PS.

The beacon requester BR defines a request of a beacon for a specific geographical area with rules to be satisfied by drones. More specifically, the request contains information such as GPS coordinates, an action (e.g. video recording deny) and beacon category (e.g. Wi-Fi SSID, QR-code) and is sent to the privacy server.

The beacon requester BR is in relationship with the cryptographic agent CA of the privacy server PS. The beacon requester BR requests the generation of a certificate by the cryptographic agent CA and the signing of the cryptographic material with the cryptographic agent CA, via a first handshake for example. Then, the beacon requester BR keeps the public root certificate of the cryptographic agent CA, and also the keys of the user (private and public keys).

The beacon requester BR receives from the privacy server PS a set of data defining a signal sent by a beacon. It is assumed that the beacon has a general meaning of being a device or object designed to attract attention to a specific location via a signal. For example, a beacon as device can be a beacon broadcaster that emits a Wi-Fi SSID, or a beacon as object can be a visual beacon under the form of a QR-code. In other examples, the beacon can emit a visible signal, such as a visible light wave, a near infrared light wave, or can emit other visible or non-visible signal that can be modulated and be optically detected via an image capture device of a drone or be detected by a radio receiver of a drone.

The beacon requester BR deploys the beacon in the chosen format (e.g. Wi-Fi SSID if it is a beacon broadcaster or QR-code if it is a visual beacon) by means of the received set of data from the privacy server PS.

Optionally, the beacon requester BR can open a data channel for direct communication between drones and the privacy server to allow the drones to retrieve in real-time the beacon meaning from the privacy server.

The drone DR includes a network interface NI having one or more wireless or wired interfaces. Examples of wireless interfaces are a 3G, 4G or other wireless telephony transceiver, a Bluetooth transceiver, a WiFi transceiver, UltraWideBand transceiver, WIMAX transceiver, ZigBee transceiver or other wireless interface. Examples of wired interfaces are a Universal Serial Bus (USB) interface, an IEEE 1394 Firewire interface, an Ethernet interface or other network card or modem.

The drone DR optionally includes a user interface UI such as a display device, touch screen, key pad, touch pad, thumb wheel, one or more buttons, a speaker, a microphone, an accelerometer, gyroscope or other motion or position sensor, or other interface devices that provide information to a user of the drone and that generate data in response to the user's interaction with the drone.

In addition, the drone DR includes an image capture device ICD such as a digital camera that captures video images with or without associated audio.

The drone DR may include a memory that stores location data corresponding to the location of the drone generated via user interaction with user interface UI, via a optional Global Positioning System (GPS) receiver, or gathered via a wireless network such as triangulation data received from a 4G network, location information from a connected access point or base station, femtocell or other location data. In addition, the memory may include a messaging application for communicating with the privacy server or other drones such as an email application, a text, instant messaging or short messaging service (SMS) application or other messaging application that stored contacts data corresponding to users of other drones.

The drone DR includes a control and positioning system CPS that can be remotely commanded to control the flight or the path of the drone. The control and positioning system can be a controllable lift mechanism such as a plurality of rotors and flight controls for controlling the flight of the drone in case of flying drone. The control and positioning system can be a controllable guiding mechanism such as a plurality of tires and direction controls for controlling the path of the drone in case of rolling drone.

The drone DR includes a beacon retriever BCR that is able to download data from the databases beacons of the privacy server SR, and to replicate the downloaded data into a local database DbL. The beacon retriever BCR can notify its position and autonomy (theoretical range distance) to determine which part of the databases can be downloaded. Furthermore, the beacon retriever BCR downloads once the public root certificate of the cryptographic agent CA and checks if it is still valid each time.

The drone DR includes a beacon checker BC that uses sensors of the drone to detect the presence of a beacon and receive information associated with the beacon. The beacon checker BC compares the information with data stored in the local database DbL to identify and authenticate the beacon. If the authentication fails, the beacon is ignored. The information associated with the beacon contains a signature of the cryptographic agent CA, the authentication being performed by means of the downloaded public root certificate of the cryptographic agent CA.

The beacon checker BC determines the rules to be applied in accordance with the identified beacon. For example, the flying drone is allowed to do everything in the surrounding area, except video recording. The rules are sent to the control and positioning system CPS for the enforcement (e.g. video recording feature is not allowed in the surroundings). For example, in case the flying over the zone is not allowed, the drone waits.

The beacon checker BC is also able to interrogate directly the privacy server PS in case information associated with the beacon cannot be compared to information stored in the local database DbL. For example, this situation may happen when the drone has no storage or the local database DbL is not up to date. For example, the beacon checker BC can interrogate the privacy server via the data channel open for direct communication between drones and the privacy server. In this case, the beacon checker sends a request containing the information associated with the beacon to the privacy server that can identify the beacon and the associated rules and send a reply containing the identified rules back to the beacon checker.

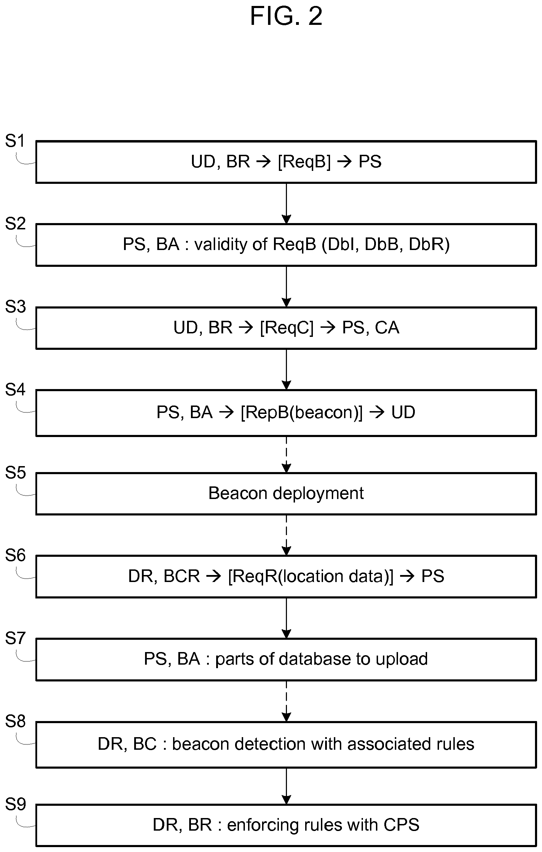

With reference to FIG. 2, a method for the management and monitoring of drones according to one embodiment of the invention comprises steps S1 to S9 executed within the communication system.

In step S1, the beacon requester BR of the user device UD sends a request ReqB to the privacy server PS for a deployment of a given beacon. The request ReqB contains location data such as GPS coordinates, rules of action of drones and a beacon category. For example, the location data can be GPS coordinates of a center point of an area such as a house or can be GPS coordinates of vertices of a polygon defining an area. The rules define actions to be taken by drones with respect to the area delimited by the location data.

Advantageously, three policies of rules can be defined to handle all the beacon situations:
- white list: actions that are allowed - e.g. take pictures as long as there is no people.
- black list: actions that are denied - e.g. do not take video records.
- gray list: actions that are not defined - where the drone provides an entity (e.g. beacon authority systems zone) with the metadata about what it did in the undefined zone, e.g. took 10 photos or 10 minutes of video with 3 people on it.

The beacon category is chosen by the user in view of the means available to the user to deploy the beacon.

In step S2, the beacon agent BA of the privacy server PS checks the validity of location data of the request with respect to the database DbI of identifiers and geographical zones, by verifying the location data are not in conflict with existing location data or existing defined areas.

Furthermore, depending on the type of location data, the beacon agent defines an area based on the location data. For example if the location data contains only the coordinates of a center point of a house, the beacon agent may define an area with said coordinates as center and with a predetermined radius, or may define an area by means of existing tools related to maps or cadastre. If the location data contain coordinates of vertices of a polygon, the beacon agent can refine the area corresponding to the polygon to avoid any conflict with existing other areas.

In step S3, the cryptographic agent CA of the privacy server PS receives a request ReqC from the beacon requester BR for the generation of a user certificate (comprised a pair of public/private keys) and the signing of cryptographic material with the cryptographic agent CA. In a first handshake for example, the cryptographic agent CA sends a public key of a certificate associated with the privacy server to the beacon requester BR, said public key being part of a root Certificate Authority digital certificate. The cryptographic agent CA also sends a generated user certificate to the beacon requester that is signed by a private key of the root Certificate Authority digital certificate. Then, the beacon requester BR keeps the public key and also keys generated for the user (private and public keys). The request ReqC for certificate can be sent before the request ReqB for beacon or the content of the request ReqC for certificate can be included in the content of the request ReqB for beacon.

In step S4, the beacon agent BA generates a set of data defining a signal to be sent by the given beacon, with instructions to deploy the beacon. The beacon agent BA stores beacon information related to the given beacon in databases, i.e. beacon identifier with location data and associated rules. In case beacon agent BA had to define an area, the beacon information further contains the defined area.

The beacon agent BA sends a reply RepB to the beacon requester BR, the reply RepB containing the set of data defining a signal to be sent by the beacon according to the beacon category and the instructions to deploy the beacon, the reply being signed by means of the certificate.

In step S5, the beacon is deployed in the chosen format, as indicated in the reply RepB. The beacon is now ready to be detected by drones located in the vicinity of the beacon.

In step S6, a drone DR is ready to be manipulated by a user. For example, a boy wants to play with the drone in a given district. Once switched on, the drone optionally automatically connects to the privacy server PS via the network interface NI. The connection may done manually by the user via the user interface UI.

The beacon retriever BCR of the drone sends a request ReqR to the privacy server PS, the request ReqR containing location data related to the current position of the drone and parameters related to the drone. For example, the parameters include the autonomy (in distance) of the drone, or include the model type of the drone.

In step S7, the beacon agent BA of the privacy server PS determines which parts of the database can be downloaded with respect to the content of the received request ReqR. The beacon agent estimates a destination area based on the current position of the drone and parameters related to the drone. For example, the destination area is estimated as a circle with position of the drone as center and the autonomy in distance as radius. The beacon agent then identifies all beacons associated with areas overlapped by the estimated destination area. The beacon agent determines then the parts of databases related to the identified beacons, said parts of databases containing rules of action of drones.

If the autonomy in distance is not included in the request ReqR, the beacon agent can deduct it from parameters inherent to the drone or from previous estimated autonomy for similar drones.

In particular, it is assumed data related to the beacon are uploaded, the data comprising the area associated with the beacon, as defined in step S2.

The beacon agent BA uploads the identified parts of the databases to the drone DR, said parts of databases containing rules of action of drones.

In step S8, when the drone DR is coming in proximity to the beacon, the beacon checker BC uses sensors of the drone to detect the presence of a beacon and receive information associated with the beacon, i.e. retrieve in the signal sent by the beacon. The beacon checker BC compares the information with data stored in the local database DbL to identify and authenticate the beacon and to identify associated rules. If the authentication fails, the beacon is ignored. The information associated with the beacon contains a signature of the cryptographic agent CA, the authentication being performed by means of the downloaded public root certificate of the cryptographic agent CA

In one embodiment, the beacon checker BC is also able to interrogate directly the privacy server PS in case information associated with the beacon cannot be compared to information stored in the local database DbL. In this case, the beacon agent BA receives a request from the beacon checker of the drone, the request containing the information associated with the beacon and identifies the beacon and the associated rules. The rules to be applied are determined in accordance with the identified beacon. The beacon agent BA sends a reply containing the identified rules back to the beacon checker.

In step S9, the beacon checker BC enforces the rules by sending them to the control and positioning system CPS (e.g. video recording feature is not allowed in the surroundings). In one example, in case the flying over the area is not allowed, the drone gets around the area. In another example, in case picture taking is not allowed, the drone can still fly over the area.

An embodiment comprises a server comprising one or more processor(s), I/O interface(s), and a memory coupled to the processor(s). The processor(s) may be implemented as one or more microprocessors, microcomputers, microcontrollers, digital signal processors, central processing units, state machines, logic circuitries, and/or any devices that manipulate signals based on operational instructions. The processor(s) can be a single processing unit or a number of units, all of which could also include multiple computing units. Among other capabilities, the processor(s) are configured to fetch and execute computer-readable instructions stored in the memory.

The functions realized by the processor may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

The memory may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. The memory includes modules and data. The modules include routines, programs, objects, components, data structures, etc., which perform particular tasks or implement particular abstract data types. The data, amongst other things, serves as a repository for storing data processed, received, and generated by one or more of the modules.

A person skilled in the art will readily recognize that steps of the methods, presented above, can be performed by programmed computers. Herein, some embodiments are also intended to cover program storage devices, for example, digital data storage media, which are machine or computer readable and encode machine-executable or computer-executable programs of instructions, where said instructions perform some or all of the steps of the described method. The program storage devices may be, for example, digital memories, magnetic storage media, such as a magnetic disks and magnetic tapes, hard drives, or optically readable digital data storage media.

## Claims

1. A method for the management and monitoring of drones, the method comprising the following steps in a privacy server (PS):
receiving (S1) a request (ReqB) for a deployment of a given beacon from a user device (UD), the request (ReqB) containing location data, rules of action of drones and a beacon category,
checking (S2) the validity of location data of the request (ReqB) by verifying the location data are not in conflict with existing location data or existing defined areas,
generating (S4) a set of data defining a signal to be sent by the given beacon according to the beacon category, with instructions to deploy the beacon,
storing (S4) beacon information related to the given beacon in databases, the beacon information containing a beacon identifier associated with the location data and the rules of action of drones,
sending (S5) a reply (RepB) to the user device (UD), the reply (RepB) containing the generated set of data and the instructions to deploy the given beacon.

2. The method as claimed in claim 1, wherein the privacy server (PS) receives a request (ReqC) from the user device (UD) for the generation of a user certificate, and signs the reply (RepB) by means of private key of a certificate associated with the privacy server.

3. The method as claimed in claim 1 or 2, wherein the privacy server (PS) defines an area based on the location data, and the beacon information further contains the defined area.

4. The method as claimed in claim 3, wherein the privacy server (PS):
receives a request (ReqR) from a drone, the request (ReqR) containing location data related to the current position of the drone and parameters related to the drone,
estimates a destination area based on the current position of the drone and parameters related to the drone,
identifies beacons associated with areas overlapped by the estimated destination area,
determines parts of databases related to the identified beacons, said parts of databases containing rules of action of drones,
uploads the identified parts of the databases to the drone.

5. The method as claimed in claim 4, wherein the estimated destination area is a circle with position of the drone as center and the autonomy of the drone in distance as radius.

6. The method as claimed in claim 4, wherein if the autonomy in distance is not included in the request (ReqR), the privacy server deducts it from the parameters related to the drone or from previous estimated autonomy for similar drones.

7. The method as claimed in any of the preceding claims, wherein the privacy server receives another request from the drone, said another request containing information associated with a beacon, identifies the beacon and the associated rules by means of said information, and sends a reply containing the identified rules back to the drone.

8. The method as claimed in any of the claims 3 to 7, wherein said rules of action of drones define actions that are allowed or denied for drones with respect to said area.

9. The method as claimed in any of the claims 2 to 8, wherein the privacy server (PS) sends a public key of the certificate associated with the privacy server to the user device (UD) in a first handshake.

10. The method as claimed in any of the claims 2 to 9, wherein the privacy server uploads a public key of the certificate associated with the privacy server to a drone (DR).

11. A privacy server (PS) for the management and monitoring of drones, comprising:
means (BA) for receiving a request (ReqB) for a deployment of a given beacon from a user device (UD), the request (ReqB) containing location data, rules of action of drones and a beacon category,
means (BA) for checking the validity of location data of the request (ReqB) by verifying the location data are not in conflict with existing location data or existing defined areas,
means (BA) for generating a set of data defining a signal to be sent by the given beacon according to the beacon category, with instructions to deploy the beacon,
means (BA) for storing beacon information related to the given beacon in databases, the beacon information containing a beacon identifier associated with the location data and the rules of action of drones,
means (BA) for sending a reply (RepB) to the user device (UD), the reply (RepB) containing the generated set of data and the instructions to deploy the given beacon.

12. A privacy server (PS) as claimed in claim 9, comprising:
means (BA) for receiving a request (ReqR) from a drone, the request (ReqR) containing location data related to the current position of the drone and parameters related to the drone,
means (BA) for estimating a destination area based on the current position of the drone and parameters related to the drone,
means (BA) for identifying beacons associated with areas overlapped by the estimated destination area,
means (BA) for determining parts of databases related to the identified beacons, said parts of databases containing rules of action of drones,
means (BA) for uploading the identified parts of the databases to the drone.

13. A computer-readable medium having embodied thereon a computer program for executing a method for the management and monitoring of drones according to any of claims 1 to 10:
